Europäisches Patentamt

European Patent Office

Office européen des brevets

(11) Veröffentlichungsnummer: **0 438 786 A2**

(12) # EUROPÄISCHE PATENTANMELDUNG

(21) Anmeldenummer: 90125528.1

(22) Anmeldetag: 27.12.90

(51) Int. Cl.⁵: **G05D 16/06**

(30) Priorität: 22.01.90 DE 4001675

(43) Veröffentlichungstag der Anmeldung:
31.07.91 Patentblatt 91/31

(84) Benannte Vertragsstaaten:
**DE GB IT NL**

(71) Anmelder: **GASTECHNIC PRODUKTIONS- UND VERTRIEBSGESELLSCHAFT m.b.H.**
**Daimlerstrasse 5 - 7**
**W-7541 Straubenhardt 1 (Feldrennach)(DE)**

(72) Erfinder: **Spiesser, Gilbert**
**Hölderlinstrasse 11**
**W-7541 Straubenhardt 1(DE)**

(54) **Gas-Druckregelgerät.**

(57) Das Gas-Druckregelgerät umfaßt einen Eingang und einen Ausgang sowie ein zwischen diesen angeordnetes Regelventil, das zwei Regelquerschnitte unterschiedlicher Größe aufweist, von denen in Abhängigkeit vom Druckniveau im Eingang der eine oder der andere steuerbar ist. Dadurch regelt das Gas-Druckregelgerät in einem weiten Eingangsdruckbereich zuverlässig den Ausgangsdruck.

EP 0 438 786 A2

## GAS-DRUCKREGELGERÄT

Die Erfindung betrifft ein Gas-Druckregelgerät mit einem Eingang und einem Ausgang sowie mit einem zwischen diesen angeordneten, von einer Arbeitsmembran in Abhängigkeit vom Druck im Ausgang betätigbaren Regelventil.

Derartige Druckregelgeräte werden eingesetzt vor allem im Zusammenhang mit der Regelung von Industriebrennern. Gas wird mit dem im Gasnetz bestehenden Druck angeliefert und muß vor dem Brenner auf den im jeweiligen Anwendungsfall erforderlichen konstanten Druck geregelt werden. Sie arbeiten in einem sogenannten Eingangsdruckbereich. Dies ist derjenige Bereich des Eingangsdruckes, in dem das Regelgerät den Ausgangsdruck genau regelt.

Bekannte Gas-Druckregler haben einen relativ engen Eingangsdruckbereich. Sie sind entweder für große oder für kleine Eingangsdrücke einsetzbar. Daher müssen für verschiedene Druckstufen, z. B. 20 bis 100 mbar oder 100 bis 300 mbar verschiedene Baugrößen gefertigt und vorrätig gehalten werden, was mit entsprechenden Kosten verbunden ist.

Der Erfindung liegt daher die Aufgabe zugrunde, ein Gas-Druckregelgerät der obengenannten Art mit großem Eingangsdruckbereich zu schaffen.

Zur Lösung dieser Aufgabe ist das Gas-Druckregelgerät dadurch gekennzeichnet, daß das Regelventil zwei Regelquerschnitte unterschiedlicher Größe aufweist, von denen in Abhängigkeit vom Druckniveau im Eingang jeweils einer steuerbar ist.

Dieses Gas-Druckregelgerät ist bei Eingangsdrücken, die sich stark unterscheiden, einsetzbar. Unabhängig vom Druckniveau ist die Regelung im Bereich kleiner Gasmengen gut.

Die Erfindung kann bei beliebig aufgebauten Druckregelgeräten realisiert werden.

Eine vorteilhafte Ausführungsform, die sich durch konstruktive Einfachheit auszeichnet, deckt zwei Druckbereiche ab und damit den Hauptteil der praktischen Falle. Sie ist dadurch gekennzeichnet, daß der kleinere Regelquerschnitt zwischen einem ersten Ventilsitz und einem ersten Ventilteller gebildet wird, welcher über einen Regelschaft mit der Arbeitsmembran verbunden ist, und daß der größere Regelquerschnitt zwischen einem zweiten Ventilsitz und einem zweiten Ventilteller gebildet wird, welcher über eine Feder in Öffnungsrichtung gegen den ersten Ventilteller verspannt ist, wobei der größere Ventilteller den Ventilsitz für den kleineren Ventilteller bildet.

Sollen mehr als zwei Druckbereiche abgedeckt werden, müssen entsprechend weitere nach dem obigen Prinzip zusammenwirkende Ventilteller/Ventilsätze vorgesehen sein.

Die Feder, die den zweiten Ventilteller gegen den ersten Ventilteller verspannt, kann sich an beliebigen Stellen abstützen. Besonders vorteilhaft ist es jedoch, wenn die Feder über einen Stützteller am Reglerschaft abgestützt ist.

Versuche haben gezeigt, daß es besonders vorteilhaft ist, den Eingangsdruck als Hilfsenergie für eine Servounterstützung des Regelvorganges einzusetzen. Erfindungsgemäß ist dann die Arbeitsmembran zwischen einer mit dem Ausgang verbundenen ·Istwertkammer und einer Sollwertkammer angeordnet, die über eine Drossel mit dem Eingang und über ein Servoventil mit dem Ausgang in Verbindung steht.

Konstruktiv besonders einfach ist es, wenn die Drossel in einem durch den Reglerschaft führenden Kanal angeordnet ist.

Erfindungsgemäß ist das Servoventil von einer Servomembran betätigbar, die entgegen der Wirkung des Druckes im Ausgang von einer verstellbaren Sollwertfeder beaufschlagt wird.

Zum vollständigen Absperren des Gasstroms ist erfindungsgemäß dem Regelventil ein Sicherheitsventil vorgeschaltet. Es kann sich hier um eine beliebige Konstruktion handeln. Vorteilhaft ist es jedoch, wenn das Sicherheitsventil eine Glocke aufweist, die über einen Ventilstößel von einem Magneten gehalten wird und die mittels Druckfeder bei Abschaltung des Magneten den ersten Ventilteller auf den Ventilsitz drückt und gleichzeitig den durch den Reglerschaft führenden Kanal verschließt. Über den ersten Ventilteller wird auch der zweite Ventilteller mit gleicher Kraft gegen den zweiten Ventilteller gedrückt.

Als erfindungswesentlich offenbart gelten auch Kombinationen der obigen Merkmale, die von den vorstehend diskutierten Verknüpfungen abweichen.

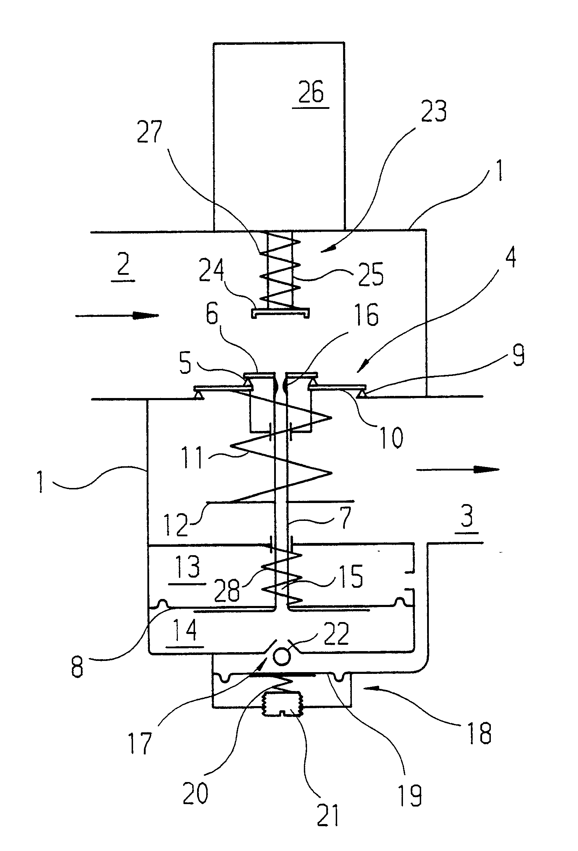

Ein Ausführungsbeispiel der Erfindung ist nachstehend unter Bezugnahme auf die Zeichnung näher erläutert, die schematisch einen Schnitt durch einen Gas-Druckregler zeigt.

Der Gas-Druckregler nach der Figur umfaßt ein Gehäuse 1 mit einem Eingang 2 und einem Ausgang 3 sowie ein zwischen diesen angeordnetes Regelventil 4.

Das Regelventil beinhaltet einen ersten Ventilsitz 5, der zusammen mit einem ersten Ventilteller 6 einen kleinen Regelquerschnitt bildet.

Der Ventilteller 6 ist eine über einen Reglerschaft 7 mit einer Arbeitsmembran 8 verbunden. Ein größerer Regelquerschnitt wird gebildet zwischen einem zweiten Ventilsitz 9 und einem zweiten Ventilteller 10, welcher über eine Druckfeder 11, die sich über einen Stützteller 12 am Reglerschaft abstützt, gegen den Ventilteller 6 verspannt ist. Der größere Ventilteller 10 bildet dabei den Ventilsitz für den kleinen Ventilteller 6. Die Arbeitsmembran 8 ist zwischen einer mit dem Ausgang 3 verbundenen Istwertkammer 13 und einer Sollwertkammer 14 angeordnet. Die Sollwertkammer 14 ist über einen durch den Reglerschaft 7 führenden Kanal 15 , der ein Drossel 16 enthält, mit dem Eingang verbunden.

Der Druck in der Sollwertkammer 14 wird über ein Servoventil 17 von einem Servoregler 18 geregelt.

Ein Verschluß 22 des Servoventils 17 wird betätigt von einer Servomembran 19, die von einer Sollwertfeder 20 beaufschlagt wird. Die Federkraft ist durch eine Verstelleinrichtung 21 in Form einer Schraube verstellbar.

Zum vollständigen Absperren des Gasstromes dient das Sicherheitsventil 23. Es umfaßt die Glocke 24, die über einen Ventilstößel 25 von einem Magneten 26 gehalten wird. Bei abgeschaltetem Magneten drückt die Glocke 24 mittels einer Schließfeder 27 den Ventilteller 6 auf den Ventilsitz 5. Der Ventilteller 6 drückt mit gleicher Kraft den Ventilteller 10 auf den zweiten Ventilsitz 9. Gleichzeitig wird der durch den Reglerschaft 7 führende Kanal 15 verschlossen. Die Sollwertkammer 14 wird durch einen an sich bekannten, nicht dargestellten Bypass in den Ausgang 2 entlüftet. Eine Rückstellfeder 28 bringt die Arbeitsmembran 8 wieder in Ruhrposition.

Sicherheitsventile sind an sich bekannt. Als Alternative zum vorstehend beschriebenen Ausführungsbeispiel kann auch ein anders aufgebautes Sicherheitsventil dem Regelventil 4 vor- oder nachgeschaltet sein.

Nachfolgend wird die Funktion des Gas-Druckregelgerätes beschrieben:
Regelgröße ist der Ausgangsdruck, der einen eingestellten Wert weder über- noch unterschreiten soll. Der tatsächliche Ausgangsdruck wirkt auf die obere Seite der Servomembran 19. Ein Ausgangsdruck, der größer ist als der Solldruck, bewirkt über die Servomembran 19 eine Kraft, die größer wird als die Vorspannung der Sollwertfeder 20. Der mit der Servomembran verbundene Verschluß 22 des Servoventils 17 öffnet sich und der Druck in der Sollwertkammer 14 sinkt. Der Reglerschaft 7 bewegt sich in Schließrichtung, so daß der Ausgangsdruck auf den Sollwert sinkt.

Sinkt der Ausgangsdruck unter den Solldruck, wird die über die Servomembran 19 erzeugte Kraft kleiner als die Vorspannung der Sollwertfeder 20 und das Servoventil 17 schließt sich. Der Druck in der Sollwertkammer 14 steigt und bewirkt, daß sich der Reglerschaft im Öffnungsrichtung bewegt und sich der Regelquerschnitt vergrößert, wodurch der Ausgangsdruck ansteigt.

Der Regelvorgang wird stabilisiert mit Hilfe der Drossel 16, die die Zuströmung in die Sollwertkammer 14 drosselt. Der Strömungsquerschnitt der Drossel 16 ist vergleichsweise klein im Verhältnis zum Öffnungsquerschnitt des Servoventils 17.

Bei niedrigem Druck im Eingang 2 strömt das Gas durch den größeren Regelquerschnitt, der durch den zweiten Ventilteller 9 und den zweiten Ventilsitz 10 gebildet wird. Der Druck im Eingang wirkt auf die Ventilteller 6, 10 und in der Sollwertkammer auf eine Unterseite der Arbeitsmembran 8. Da die wirksame Fläche der Arbeitsmembran größer ist als die Fläche der Ventilteller wirkt eine Kraft in Öffnungsrichtung, die den Ventilteller 9 vom Sitz 10 gelöst hält. Da die Federkraft der Druckfeder 11 größer ist als die Kraft des Eingangsdrucks, der auf den zweiten Ventilteller 10 wirkt, bleiben die Ventilteller 6, 10 zusammen.

Ein hoher Druck im Eingang 2 wirkt ebenfalls auf die Ventilteller 6, 10 und die Arbeitsmembran 8. Durch den großen Druckunterschied zwischen Eingang 2 und Ausgang 3 wirkt eine große Kraft in Schließrichtung auf den zweiten Ventilteller 10. Über die Arbeitsmembran 8 bewirkt der Eingangsdruck eine große Kraft in Öffnungsrichtung. Wenn die Kraftdifferenz größer wird als die Kraft der Druckfeder 12, hebt sich nun der erste Ventilteller 6 vom Sitz 5 und bildet den Regelquerschnitt.

Das Gas-Druckregelgerät arbeitet mit Servounterstützung des Regelvorganges. Bei einem erfindungsgemäßen Druckregelgerät, daß ohne Servoregler arbeitet, wirkt auf die Arbeitsmembran eine entsprechend vorbelastete Feder ein.

Das beschriebene Gas-Druckregelgerät arbeitet zuverlässig bei Eingangsdrücken, die zwischen 20 mbar und 350 mbar liegen und deckt zwei Druckbereiche ab. Es wird vorzugsweise im Zusammenhang mit der Regelung von Industriebrennern eingesetzt.

Sollen mehr als zwei Druckbereiche abgedeckt werden, müssen entsprechend mehr Ventilteller/Ventilsitz-Kombinationen vorgesehen werden.

**Patentansprüche**

1. Gas-Druckregelgerät mit einem Eingang (2 ) und einem Ausgang (3) sowie mit einem zwischen diesen angeordneten von einer Arbeitsmembran (8) in Abhängigkeit vom Druck im Ausgang betätigbaren Regelventil (4), dadurch gekennzeichnet, daß das Regelventil (4) mindestens zwei Regelquerschnitte unterschiedlicher Größe aufweist, von denen in Abhängigkeit vom Druckniveau im Eingang (2) jeweils einer steuerbar ist.

2. Gas-Druckregelgerät nach Anspruch 1, dadurch gekennzeichnet, daß der kleinere Regelquerschnitt zwischen einem ersten Ventilsitz (5) und einem ersten Ventilteller (6) gebildet wird, welcher über einen Reglerschaft (7) mit der Arbeitsmembran (8) verbunden ist, und daß der größere Regelquerschnitt zwischen einem zweiten Ventilsitz (9) und einem zweiten Ventilteller (10) gebildet wird, welcher über eine Feder in Öffnungsrichtung gegen den ersten Ventilteller (6) verspannt ist, wobei der größere Ventilteller (10) den Ventilsitz (5) für die kleineren Ventilteller (6) bildet.

3. Gas-Druckregelgerät nach Anspruch 2, dadurch gekennzeichnet, daß die Feder (11) über einen Stützteller (12) am Reglerschaft (7) abgestützt ist.

4. Gas-Druckregelgerät nach einem der Ansprüche 1-3, dadurch gekennzeichnet, daß die Arbeitsmembran (8) zwischen einer mit dem Ausgang (3) verbundenen Istwertkammer (13) und einer Sollwertkammer (14) angeordnet ist, die über eine Drossel (16) mit dem Eingang (2) und über ein Servoventil (17) mit dem Ausgang (3) in Verbindung steht.

5. Gas-Druckregelgerät nach Anspruch 4, dadurch gekennzeichnet, daß die Drossel (16) in einem durch den Reglerschaft führenden Kanal (15) angeordnet ist.

6. Gas-Druckregelgerät nach Anspruch 4 oder 5, dadurch gekennzeichnet, daß das Servoventil (17) von einer Servomembran (19) betätigbar ist, die entgegen der Wirkung des Drucks im Ausgang (3) von einer verstellbaren Sollwertfeder (20) beaufschlagt wird.

7. Gas-Druckregelgerät nach einem der Ansprüche 1 bis 6, dadurch gekennzeichnet, daß dem Regelventil (4) ein Sicherheitsventil (23) zum vollständigen Absperren des Gasstromes vorgeschaltet ist.

8. Gas-Druckregelgerät nach Anspruch 7, dadurch gekennzeichnet, daß das Sicherheitsventil (23) eine Glocke (24) aufweist, die über einen Ventilstößel (25) von einem Magneten (26) gehalten wird und die mittels Schließfeder (27) bei Abschaltung des Magneten (26) den ersten Ventilteller (6) gegen den Ventilsitz (5) drückt und gleichzeitig den durch den Reglerschaft (7) führenden Kanal (15) verschließt.